# EUROPEAN PATENT APPLICATION

(11) **EP 1 666 673 A1**
(43) Date of publication of application: **07.06.2006**
(21) Application number: 04787937.4
(22) Date of filing: 21.09.2004
(51) Int. Cl.: E02F 9/24, B60Q 1/04, B60Q 5/00

(54) **CONSTRUCTION MACHINE**

(30) Priority: 26.09.2003 JP 2003334815
(71) Applicant: HITACHI CONSTRUCTION MACHINERY CO., LTD., Bunkyo-ku, Tokyo 112-0004 (JP)
(72) Inventor: TANAKA, Hideaki, Hitachi Construct. Machin. Co Ltd, Tuchiura-shi, Ibaraki 300-0013 (JP); ONOUE, Hiroshi, Hitachi Construct. Machin. Co. Ltd, Tuchiura-shi, Ibaraki 300-0013 (JP); ICHIMURA, Kazuhiro, Hitachi Constr. Machin. Co Ltd, Tuchiura-shi, Ibaraki 300-0013 (JP); SUZUKI, Yoshikatsu, Hitachi Constr. Machin. Co Ltd, Tuchiura-shi, Ibaraki 300-0013 (JP); OJIMA, Mitsugu, Hitachi Construct. Machin. Co Ltd, Tuchiura-shi, Ibaraki 300-0013 (JP); ISHIMARU, Hideharu, Hitachi Constr. Machin. Co Ltd, Tuchiura-shi, Ibaraki 300-0013 (JP); NEYA, Hozumi, Hitachi Construct. Machinery Co. Ltd, Tuchiura-shi, Ibaraki 300-0013 (JP); MUROTA, Jujitsu, Hitachi Construc. Machin. Co. Ltd, Tuchiura-shi, Ibaraki 300-0013 (JP); YOSHIKAWA, Masaki, Hitachi Constr. Machin. Co. Ltd, Tuchiura-shi, Ibaraki 300-0013 (JP); TAKAYAMA, Tsuyoshi, Hitachi Constr. Machin. Co Ltd, Tuchiura-shi, Ibaraki 300-0013 (JP)
(74) Representative: Beetz & Partner
(86) International application number: PCT/JP2004/013754
(87) International publication number: WO 2005/031072

(57) **Abstract**

The present invention provides a construction machine adopting a structure that assures a predetermined sound pressure level along a forward direction relative to the construction machine and allows a warning horn to be miniaturized. Warning horns 12 and 13 are mounted in the vicinity of at least either a left headlamp 9 or a right headlamp 10 provided on the left side and the right side of a vehicle body 3 of the construction machine. The warning horns 12 and 13 are housed inside a bracket 11 used to mount the headlamp 9 or 10. The plurality of warning horns 12 and 13 are disposed on a single side toward the left headlamp 9 or the right headlamp 10. Since a front attachment 7 does not block the sound generated from the warning horns 12 and 13 and thus the warning sound can travel without hindrance along the forward direction, a predetermined sound pressure level is achieved with ease along the forward direction relative to the vehicle body 3.

## Description

### TECHNICAL FIELD

The present invention relates to a construction machine such as a hydraulic excavator, a crane or a support machine thereof, and more specifically, it relates to a mounting structure that may be adopted when mounting a warning horn on the construction machine.

### BACKGROUND ART

A warning horn that is used to issue a warning for the drivers of other vehicles and pedestrians while a construction machine such as a hydraulic excavator or a loader shovel is traveling, is mounted at the base of the front attachment located at the center of the vehicle body in the related art, as disclosed in Japanese Laid Open Patent Publication No. H8-284195.

### DISCLOSURE OF THE INVENTION

The construction machine in the related art having the warning horn mounted at the base of the front attachment thereof, as described above, has a problem to be addressed in that the front attachment blocking the propagation of the warning sound at the front of the machine lowers the level of the sound pressure at the front of the construction machine, posing a safety risk. In addition, a larger warning horn may need to be used or a greater number of warning horns may have to be mounted in order to assure a desired sound pressure level.

An object of the present invention, which has been completed by addressing the problem discussed above, is to provide a construction machine adopting a structure that assures a specific sound pressure level at the front of the construction machine and allows the warning horn to be miniaturized.
(1) The construction machine according to the present invention is characterized in that it includes a warning horn mounted in the vicinity of at least one of the headlamps provided on the left side and the right side of the vehicle body of the construction machine.
(2) The construction machine according to the present invention is also characterized in that the warning horn is housed inside a bracket used to mount the headlamp at the construction machine described in (1) above.
(3) The construction machine according to the present invention is further characterized in that a plurality of warning horns are disposed on a side on which either the left headlamp or the right headlamp is located at the construction machine described in (1) or (2) above.

Since a warning horn is mounted in the vicinity of the left or right headlamp at the vehicle body, the warning sound from the warning horn is propagated forward without being blocked by the front attachment mounted at the center of the vehicle body to assure a higher sound pressure level at the front of the construction machine, thereby improving the safety of operations. In addition, a predetermined sound level can be achieved with greater ease along the forward direction relative to the vehicle body even with a compact warning horn. By housing the warning horn inside the bracket used to mount the headlamp, the need for a case, which would otherwise be required in order to protect the warning horn from the elements, is eliminated. Furthermore, if a plurality of warning horns are mounted on one side on which either the left headlamp or the right headlamp is located, the secondary battery provided at the vehicle body and the warning horns can be connected through wiring contained on one side, which means that the wiring work is facilitated.

### BRIEF DESCRIPTION OF THE DRAWINGS

FIG. 1A is a side elevation of the construction machine achieved in an embodiment of the present invention;
FIG. 1B is a front view of the construction machine in FIG. 1A;
FIG. 1C is an enlargement of an essential portion of FIG. 1B;
FIG. 2A is a side elevation of the construction machine achieved in another embodiment of the present invention;
FIG. 2B is a front view of the construction machine in FIG. 2A; and
FIG. 2C is an enlargement of an essential portion of FIG. 2B.

### BEST MODE FOR CARRYING OUT THE INVENTION

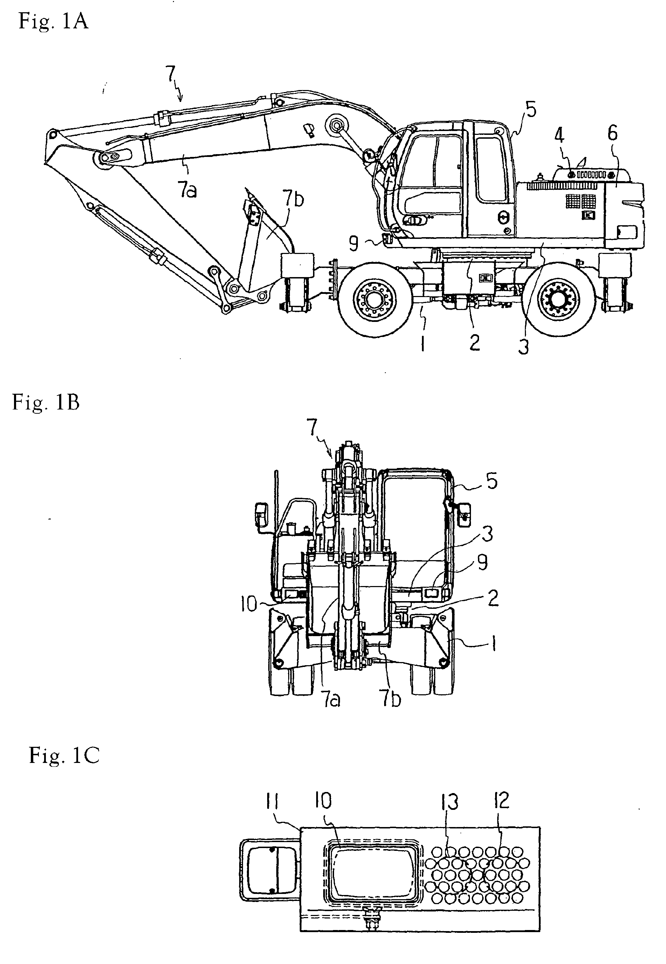

FIGS. 1A to 1C show the construction machine achieved in an embodiment of the present invention. FIGS. 1A and 1B are respectively a side elevation and a front view of the construction machine, whereas FIG. 1C is an enlargement of an essential portion of FIG. 1B. This embodiment is achieved by adopting the present invention in a wheel hydraulic excavator having a revolving superstructure (body) 3 mounted atop a wheel traveling superstructure 1 via a revolver device 2, a hydraulic power unit 4, an operator's cab 5, a counterweight 6 and the like mounted on the revolving superstructure 3 and a front attachment 7 mounted at the revolving superstructure 3 so as to project out forward. The front attachment 7 is constituted with an articulated arm 7a and a bucket 7b.

Headlamps 9 and 10 are mounted at positions toward the two sides at the front of the revolving superstructure 3. In the vicinity of either the left headlamp 9 or the right headlamp 10, e.g., in the vicinity of the right-side headlamp 10, warning horns 12 and 13 are disposed inside a mounting bracket 11 used to mount the headlamp 10, so as to lie next to the headlamp 10, as shown in FIG. 1C. In this example, a plurality of warning horns 12 and 13 are mounted in order to generate an acoustically pleasant sound by varying the frequencies of the sounds generated by the individual warning horns and/or to allow the use of more compact warning horns by ensuring that the total sound pressure level of the sounds from the smaller warning horns 12 and 13 achieves a predetermined level.

By mounting the warning horns 12 and 13 in the vicinity of the headlamp 10 as described above, the warning sound generated by the warning horns 12 and 13 is not blocked by the front attachment 7 mounted at the central area and thus is propagated forward unhindered to improve the safety. In addition, since a predetermined sound pressure level can be achieved along the forward direction relative to the revolving superstructure 3 with greater ease even with more compact warning horns 12 and 13, the warning horns 12 and 13 can be miniaturized. Since the warning horns 12 and 13 are housed inside the bracket 11 for the headlamp 10, the need for a case that would otherwise be required to protect the warning horns 12 and 13 from the elements is eliminated in the embodiment. Furthermore, while the warning horns 12 and 13 may be mounted in the vicinity of both the left headlamp 9 and the right headlamp 10, the wiring work is facilitated by disposing the plurality of warning horns 12 and 13 in the vicinity of one of the headlamps, i.e., the front headlamp 10, since the secondary battery provided at the revolving superstructure 3 and the warning horns 12 and 13 are connected through wiring contained on one side of the revolving superstructure 3.

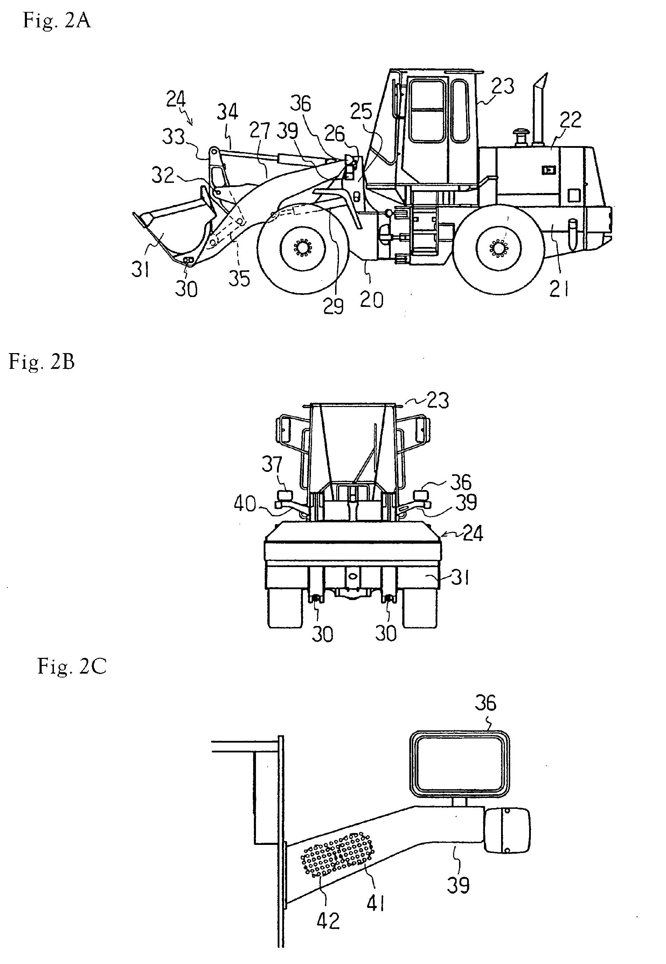

FIGS. 2A to 2C show the construction machine achieved in another embodiment of the present invention. FIGS. 2A and 2B are respectively a side elevation and a front view of the construction machine, and FIG. 2C is an enlargement of and the essential portion of FIG. 2B. This embodiment is achieved by adopting the present invention in a wheel loader having a vehicle body constituted with a front body 20 and a rear body 21, with a hydraulic power unit 22, an operator's cab 23 and the like mounted atop the rear body 21 and a front attachment 24 mounted at the front of the front body 20 and projecting out forward. The front attachment 24 includes an arm 27 mounted at a bracket 25 set upright at the rear body 21 so as to be allowed to move up/down freely around a pin 26 and an arm cylinder 29, which causes the arm 27 to move up/down, mounted between the arm 27 and the bracket 25. At the front end of the arm 27, a bucket 31 is mounted so as to be allowed to rotate freely around a pin 30.

A device that causes the bucket 31 to rotate comprises a bell crank 33, a central portion thereof mounted at the arm 27 so as to be allowed to rotate freely around a pin 32, a bucket cylinder 34 mounted between the upper end of the bell crank 33 and the bracket 25 and a link 35 linking the lower end of the bell crank 33 with the bucket 31.

On the left side and the right side of the front body 20, mounting brackets 39 and 40 used to mount headlamps 36 and 37 are mounted so that they project out respectively to the left and to the right at positions high enough to ensure that their front portions are not blocked by the bucket 31 when the construction machine assumes the traveling attitude, as shown in the figure. These brackets 39 and 40 are hollow, and warning horns 41 and 42 are housed inside the left bracket 39.

The embodiment achieves advantages similar to those of the previous embodiment.

While the warning horns are housed inside a headlamp mounting bracket in both of the embodiments explained above, they may be mounted outside the bracket in the vicinity of the headlamp instead of housing them in the bracket. In addition, only a single warning horn may be mounted on a side near either the left headlamp or the right headlamp. Furthermore, while two warning horns are housed inside the headlamp mounting bracket located on one side in the embodiment described above, the left headlamp mounting bracket and the right headlamp mounting bracket may each house a warning horn instead. The present invention is not limited to the embodiments described above and may be adopted with outstanding effectiveness in another type of construction machine that travels on roads.

### INDUSTRIAL APPLICABILITY

The present invention may be adopted in a construction machine such as a hydraulic excavator, a crane or a support machine thereof that is capable of traveling and includes a warning horn which generates a warning sound in response to an operation by the operator.

## Claims

1. A construction machine **characterized in;**
**that** a warning horn (12), (13) is mounted in the vicinity of at least either a left headlamp (9) or a right headlamp (10) disposed on a left side and a right side of a vehicle body (3) of said construction machine.

2. A construction machine according to claim 1, **characterized in;**
**that** said warning horn (12), (13) is housed inside a bracket (11) used to mount said headlamp (9) or (10) .

3. A construction machine according to claim 1 or claim 2, **characterized in;**
**that** a plurality of warning horns (12), (13) are disposed on a side toward either said left headlamp (9) or said right headlamp (10).
